# EUROPÄISCHE PATENTSCHRIFT

(11) **EP 0 561 742 B1**
(45) Veröffentlichungstag und Bekanntmachung des Hinweises auf die Patenterteilung: **04.10.1995**
(21) Anmeldenummer: 93810194.6
(22) Anmeldetag: 18.03.1993
(51) Int. Cl.: B27B 5/06, B23D 59/00, B23Q 11/00, B23Q 1/01, B08B 15/00

(54) **Plattensäge mit Absaugekanal**
Panel saw with suction removal duct
Scie à panneaux munie d'un canal d'aspiration des copeaux

(30) Priorität: 20.03.1992 CH 893/92
(43) Veröffentlichungstag der Anmeldung: 22.09.1993
(73) Patentinhaber: Striebig AG, CH-6014 Littau (CH)
(72) Erfinder: Striebig, Ludwig, CH-6005 Luzern (CH)
(74) Vertreter: Eschmann, Heinz

(56) Entgegenhaltungen:
- EP-A- 0 244 358
- FR-A- 2 369 067
- US-A- 4 802 392

## Beschreibung

Die Erfindung betrifft eine Plattensäge gemäss dem Oberbegriff des unabhängigen Patentanspruchs 1.

Es ist durch die US-Patentschrift 4 802 392 bekannt, an der Rückseite des Lattenrostes mindestens einen vertikalen Absaugekanal anzuordnen, in den die zwischen den Rostlatten befindlichen, als Ausblaskanäle wirkenden Zwischenräume münden. Diese Zwischenräume sind nach der Bedienungsseite hin einerseits durch die zu zerteilende Platte, andererseits durch eine aufrollbare Abdichtfolie abgedeckt. Angesichts des robusten Betriebs, dem derartige Plattensägen ausgesetzt sind, hat sich diese Bauart nicht bewährt. Die an sich schon verschleissanfällige Abdichtfolie erfordert eine sichere Führung. Auch müssen bei dieser Bauart sämtliche Horizontalschnitte, insbesondere auch die relativ kurzer Plattenteile, bezüglich des am rechten Rand angeordneten vertikalen Absaugekanals ausgeführt werden, was für den Benützer umständlicher und arbeitsaufwendiger ist, als wenn er die kleineren Plattenteile auch im Mittelbereich des Lattenrostes zerteilen könnte. Der hiermit verbundene Zeitaufwand spielt bei den grossen Plattensägen, die beispielsweise bei den Möbelfabrikanten praktisch pausenlos in Betrieb sind, eine erhebliche Rolle.

Es ist die Aufgabe der vorliegenden Erfindung, eine Plattensäge der eingangs definierten Art vorzuschlagen, welche bei mindestens gleich guter Absaugequalität auf die Verwendung eines flexiblen Abdeckelements (Abdichtfolie) verzichtet und gleichzeitig dem Anwender die Möglichkeit schafft, auch kürzere Plattenteile ohne zusätzlichen Aufwand im Mittelbereich des Plattenrostes horizontal zu zerteilen.

Die erfindungsgemässe Plattensäge ist im unabhängigen Patentanspruch 1 definiert. Bevorzugte Ausführungsformen ergeben sich aus den abhängigen Patentansprüchen.

Es wird nachstehend, anhand der beiliegenden Zeichnung, ein Ausführungsbeispiel des Erfindungsgegenstandes beschrieben. Es zeigen:
- Fig. 1 einen Vertikalschnitt einer Ausführungsform der erfindungsgemässen Plattensäge,
- Fig. 2 die entsprechende Frontansicht,
- Fig. 3 eine Perspektivdarstellung eines Konstruktionsdetails,
- Fig. 4 und 5 Schnittdarstellungen weiterer konstruktiver Einzelheiten,
- Fig. 6 ein weiteres konstruktives Detail im Schnitt,
- Fig. 7 einen vergrösserten Schnitt im Bereich des mittleren vertikalen Absaugekanals,
- Fig. 8 einen Schnitt im Bereich des mittleren vertikalen Absaugekanals in Vertikalschnittposition der Absperrlamellen,
- Fig. 9 einen entsprechenden Schnitt beim horizontalen Zerteilen einer grossen, am rechten Lattenrostrand anliegenden Platte und
- Fig. 10 einen entsprechenden Schnitt beim horizontalen Zerteilen einer kleinen Platte.

Am Rahmen 1 der Plattensäge ist ein Lattenrost 5 höhenverschiebbar aufgehängt. Die Aufhängung erfolgt bei vorliegender Ausführung über Zugfedern 6, von welchen der Uebersichtlichkeit halber nur eine gezeigt ist und die danach trachten, den Lattenrost 5 in seiner oberen Endlage zu halten, insofern keine stärkeren, nach unten gerichteten Kräfte auf ihn einwirken.

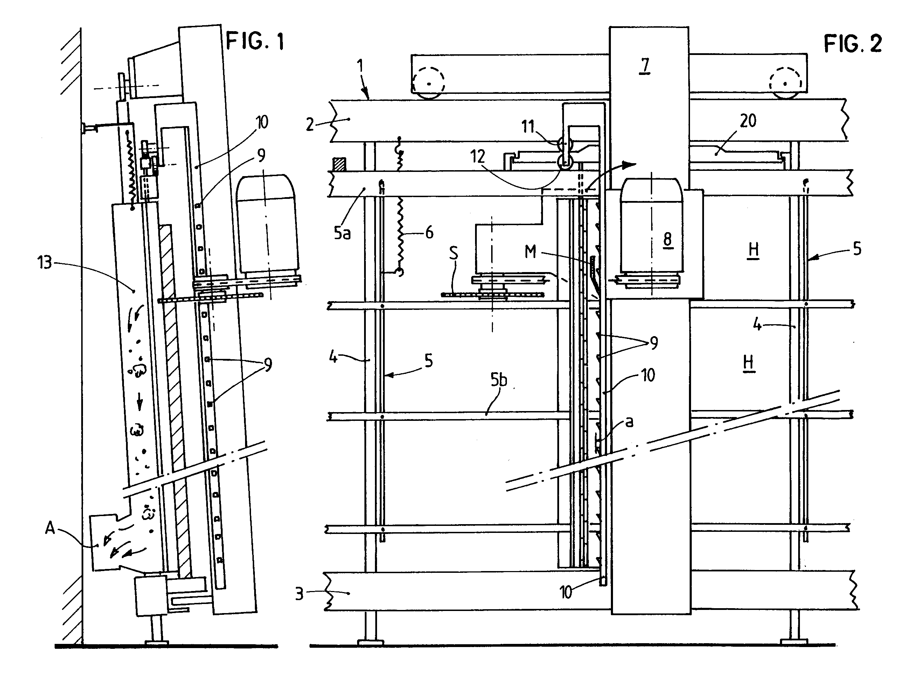

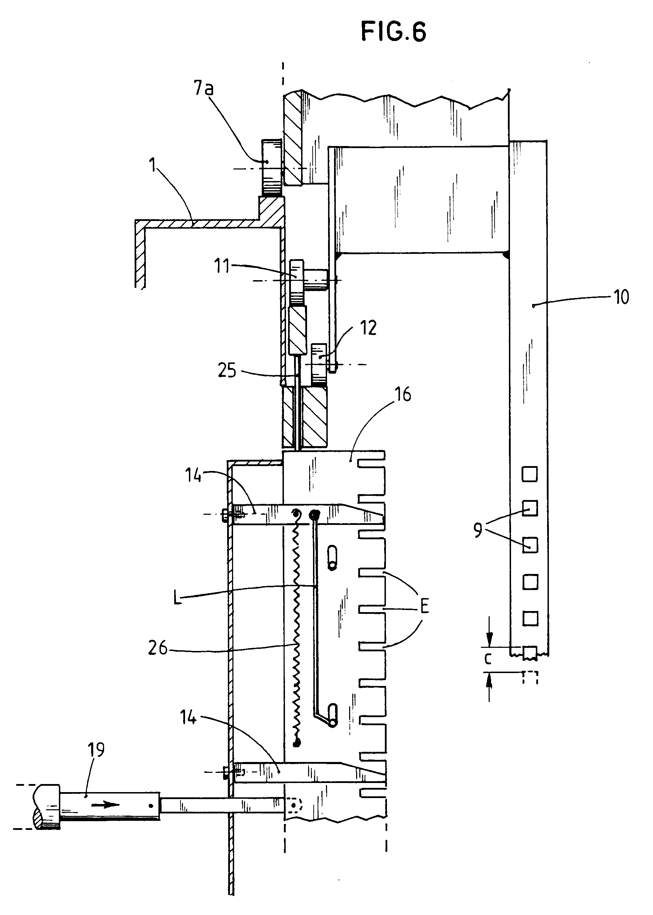

Ein Sägebalken 7, an welchem ein Sägeaggregat 8 höhenverschiebbar gelagert ist, lässt sich längs des Rahmens 1 über dessen Gesamtlänge von Hand verschieben und stützt sich dabei über Rollen 7a (Fig. 6) auf den Rahmen 1. Das Sägeaggregat 8 ist um 90° in Pfeilrichtung (Fig. 2) verschwenkbar und lässt sich dadurch von der dargestellten Horizontalschnitt-in eine Vertikalschnittposition bringen, wobei auch das Sägeblatt S um 90° mitverschwenkt wird.

Wie Fig. 2 ferner zeigt, ragt in der Horizontalschnittposition ein mit dem Sägeaggregat 8 verbundener Mitnehmer M in den vertikalen Mitnahmebereich der Nocken 9 einer Nockenstange 10, die an ihrem oberen Ende zwei Steuerrollen 11 und 12 trägt, deren untere 12 sich auf die oberste horizontale Leiste 5a des Lattenrostes 5 abstützt und seitlich, d.h. in Richtung des Betrachters, gegen die obere Steuerrolle 11 versetzt ist.

Die vertikalen Abstände c (Fig. 6) der Nocken 9 sind so gewählt, dass der Mitnehmer M beim "Eintauchen" des Sägeaggregates 8, d.h. bei dessen Vorschubbewegung in Richtung auf das zu zerteilende Werkstück, beispielsweise eine Holzplatte, auf eine der Nocken 9 auftrifft und damit den gesamten Lattenrost 5 soweit vertikal, entgegen der Rückstellkraft der Zugfeder 6, so verschiebt, dass das Sägeblatt S spätestens beim Eintauchen desselben in Richtung Werkstück zwischen zwei benachbarte Rostlatten 5b zu liegen kommt und der Horizontalschnitt die Rostlatten 5b nicht beschädigt.

Beim Vertikalschnitt, in welchem das gegenüber Fig. 2 um 90° verschwenkte Sägeaggregat 8 längs des Sägebalkens 7 vertikal verschoben wird, entfernt sich der mit dem Sägeaggregat gekoppelte Mitnehmer M so weit seitlich (in Fig. 2 nach links) von den Nocken 9, dass er im Abstand vertikal an ihnen vorübergleitet. Die hierzu erforderliche mechanische Koppelung der Mitnehmers M mit der Verschwenkbewegung des Sägeaggregats 8 ist eine dem Fachmann zumutbare Routineangelegenheit und daher nicht im Detail beschrieben.

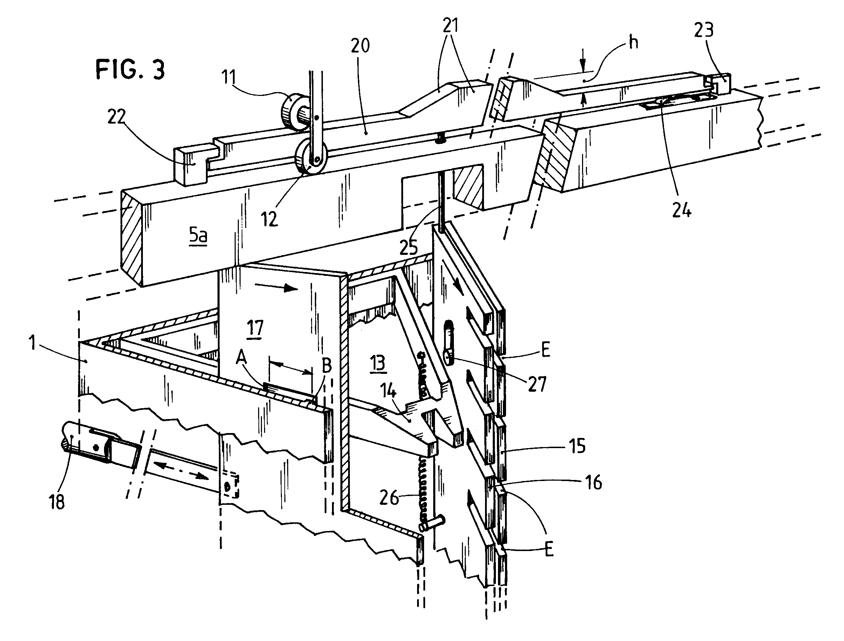

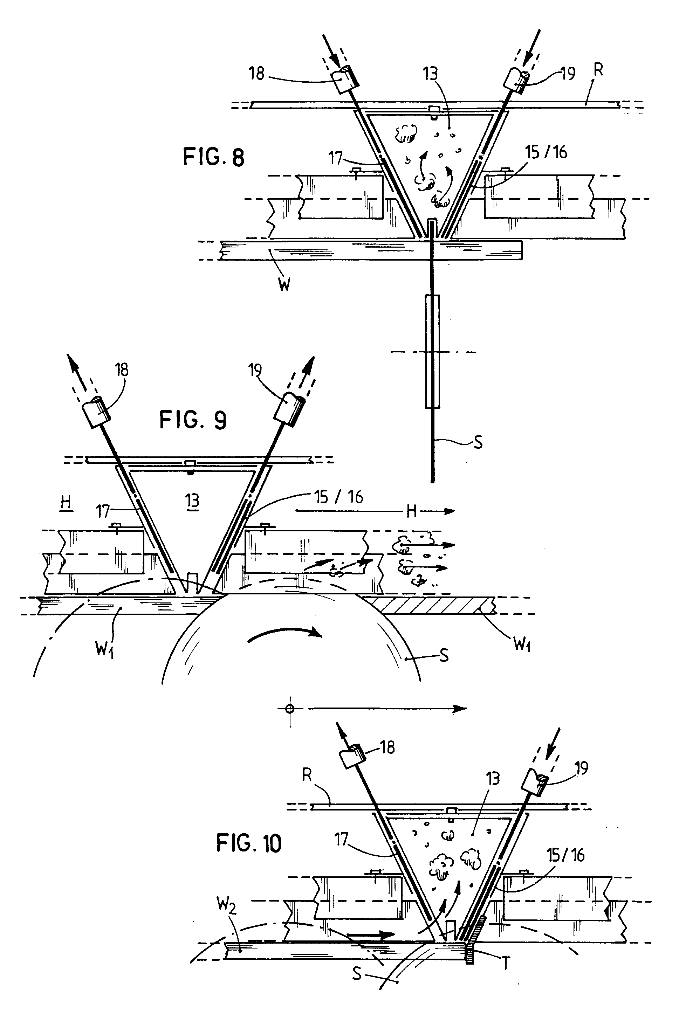

Die Plattensäge ist zur Absaugung des beim Sägen entstehenden Holzstaubes mit zwei vertikalen Absaugekanälen verbunden, von welchen die Zeichnung nur den im Mittelbereich der Plattensäge angeordneten und mit 13 (Fig. 1) bezeichneten zeigt. Im Erstreckungsbereich des Absaugekanals 13 sind in Abständen am Rahmen 1 mehrere Führungsbügel 14 (Fig. 3) befestigt, die zur waagrechten Führung zweier den Absaugekanal 13 seitlich begrenzender Absperrorgane dienen, wobei das in Fig. 3 rechts befindliche Absperrorgan zwei aneinanderliegende, vertikal gegeneinander verschiebbare Absperrlamellen 15 und 16 aufweist, das linke Absperrorgan dagegen durch eine einzige Absperrlamelle 17 gebildet ist. Sowohl die linke als auch die beiden rechten Absperrlamellen lassen sich durch Antriebsorgane, beispielsweise Linearmotoren 18 und 19 (Fig. 8, 9, 10), in waagrechter Richtung so weit, auf den Führungsbügeln 14 gleitend, gesteuert bewegen, dass der nachstehend noch zu beschreibende Vorgang zustandekommt. Die in Richtung der Pfeile erfolgende waagrechte Verschiebung ist durch Anschläge A/B begrenzt.

Wie ferner Fig. 3 zeigt, befindet sich oberhalb des waagrechten Lattenrostbalkens 5a ein Steuerbalken 20, der in seinem Mittelbereich eine Steuerkurve 21 trägt. Der gegenüber dem Lattenrostbalken 5a vertikalbeweglich gesteuerte Steuerbalken 20 wird in seiner nach oben gerichteten Bewegung durch zwei an der Rostleiste 5a befestigte Anschläge 22 und 23 begrenzt und liegt in seiner in Fig. 3 gezeichneten Lage unter dem Einfluss einer Blattfeder 24 und eines weiteren, elastisch vorgespannten Organes an den Anschlägen 22 und 23 an. Das vorerwähnte Organ ist hier ein Steuerstift 25,der mit der inneren Absperrlamelle 16 fest verbunden, mit seinem oberen Ende durch die Rostleiste 5a hindurchgeführt ist und am Steuerbalken 20 von unten anliegt. Die innere Absperrlamelle 16 ist an einem Lenker L (Fig. 6) am Führungsbügel 14 aufgehängt und durch eine Zugfeder 26, deren oberes Ende am Führungsbügel 14 angreift, nach oben vorgespannt und in ihrer nach oben gerichteten Vertikalbewegung durch einen an der äusseren Absperrlamelle 15 angeordneten Anschlagstift 27 begrenzt. Der Steuerbalken 20 wird somit nicht nur durch die Blattfeder 24, sondern auch durch den elastisch vorgespannten Steuerstift 25 in seiner oberen Endlage nach Fig. 3 gehalten, solange er sich nicht unter dem Einfluss einer weiteren Kraft nach unten bewegt.

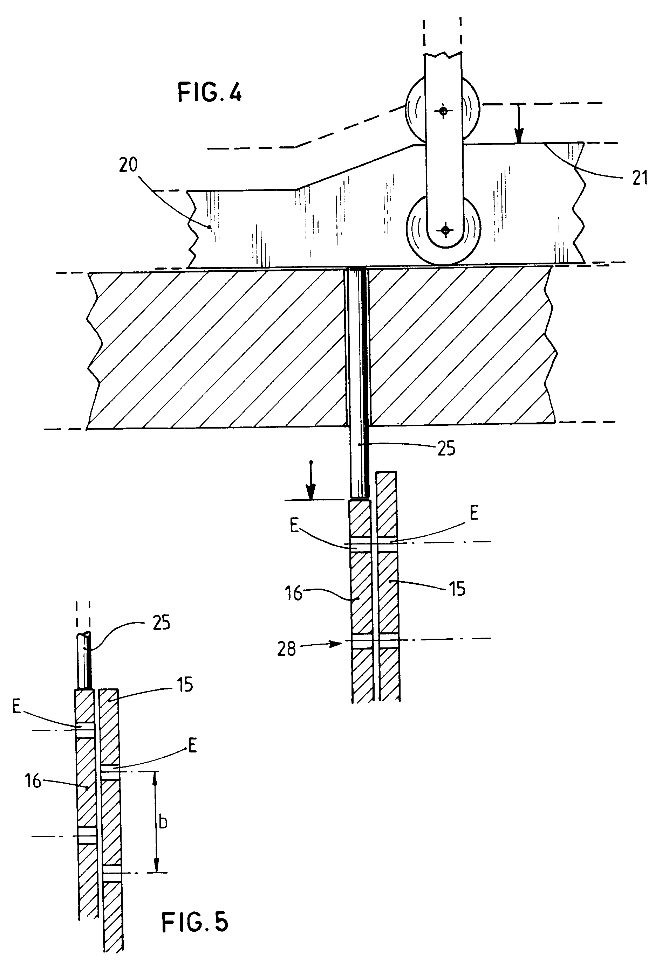

Die beiden rechts des vertikalen Absaugekanals 13 angeordneten Absperrlamellen 15 und 16 sind ferner mit nach vorne offenen Einschnitten E (Fig. 3 bis 6) versehen, die in einer bestimmten Relativlage der beiden Absperrlamellen 15 und 16 miteinander fluchten. In dieser Position bilden die in Ueberdeckungslage befindlichen Einschnitte E auf der Höhe des Sägeblattes S einen Sägespalt 28 (Fig. 4), der das Sägeblatt im geeigneten Moment passieren lässt.

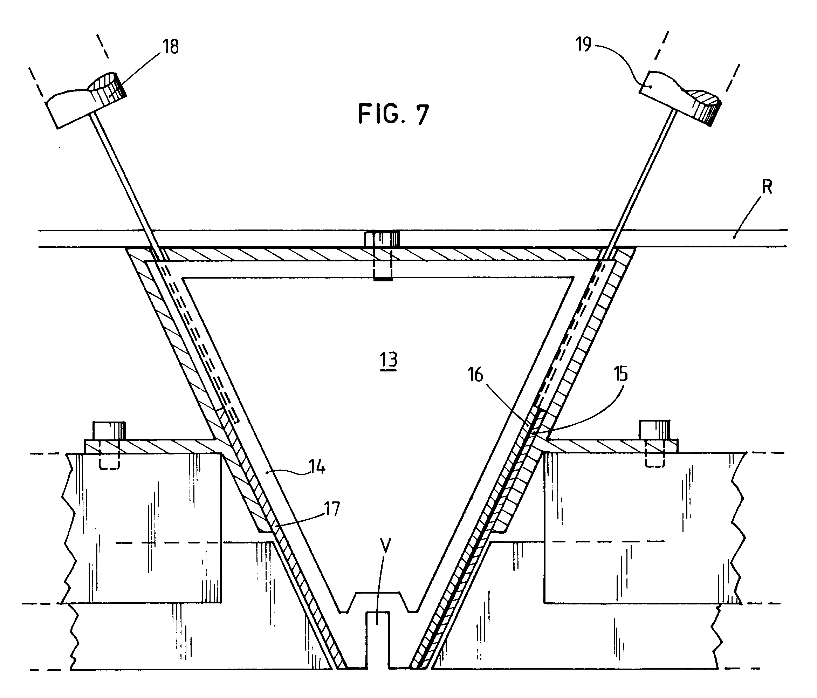

Der vertikale Absaugekanal 13 wird, wie die Fig. 7 bis 10 zeigen, nach vorne durch das Werkstück W, nach hinten durch eine Rückwand R begrenzt, die gleichzeitig die vordere und hintere Begrenzung der waagrechten Horizontalschnitt-Absaugekanäle bilden, die durch die waagrechten Latten 5b des Lattenrostes 5 voneinander getrennt sind.

Der gegenseitige Abstand der Nocken 9 an der am Lattenrost 5 aufgehängten Nockenstange 10 ist so gewählt, dass
a) der Lattenrost 5 über die Nockenstange 10 jedesmal dann verschoben wird, wenn das Risiko einer Kollision des Sägeblattes S mit einer der waagrechten Rostlatten 5b besteht und
b) die Einschnitte der rechten Absperrlamelle 15 in jeder Vertikallage des in Horizontalschnittposition befindlichen Sägeblattes S auf gleicher Höhe mit dem Sägeblatt liegen.

Die Verstellhöhe "h" (Fig. 3) der Steuerkurve 21 ist ferner so bestimmt, dass sich die Einschnitte E der beiden Absperrlamellen 15 und 16 gegen Ende des Horizontalschnitts exakt überlappen, d.h. auf gleicher Höhe liegen und damit den erwähnten offenen Sägespalt 28 (Fig. 4) bilden.

Auf diese Weise ist gewährleistet, dass der beim Horizontalschnitt anfallende Holzstaub während praktisch des gesamten Horizontalschnittvorganges mit Sicherheit abgesaugt wird und dass dennoch keine Beschädigung der den Absaugekanal umgrenzenden Teile möglich ist.

Die beschriebene Einrichtung arbeitet folgendermassen:

Beim Eintauchen des Sägeaggregates 8 in Richtung Werkstück wird zunächst der Lattenrost 5 durch den Mitnehmer M in seiner Vertikallage so positioniert, dass eine Kollision des Sägeblattes S mit einer waagrechten Latte 5b ausgeschlossen ist. Dem Eintauchweg E (Fig. 6) entspricht dabei jeweils eine Höhenverstellung C des betreffenden Nockens 9 und damit des Lattenrostes.

Mit dem Eintauchen beginnt der Sägevorgang, wobei der anfallende Holzstaub vom Sägeblatt S tangential hinter dem Werkstück W weggeschleudert wird. Beim Zerteilen einer grossen, die gesamte Vorderfläche der Plattensäge bis zum rechten Rand überdeckenden Platte W₁ (Fig. 9) erfolgt die Absaugung problemlos über den horizontalen Absaugekanal H und wird zunächst durch den vertikalen Absaugekanal 13, dann durch den nicht gezeigten, am rechten Rand der Plattensäge befindlichen zweiten vertikalen Absaugekanal weggesaugt. Beim Zerteilen kleiner Platten (W₂ in Fig. 10) liegt die Platte W₂ mit ihrem rechten Rand an einem Anschlag T an, die linke Absperrlamelle 17 ist zurückgezogen, die beiden rechten Absperrlamellen 15 und 16 sind nach vorne in Abdichtposition geschoben und deren Einschnitte E überlappen sich im Hinblick auf die Abdichtung zunächst noch nicht, bis erst gegen Ende des Sägevorganges durch die erwähnte fluchtende Ueberlappung der Sägespalt 28 gebildet wird.

Mit fortschreitendem Horizontalvorschub des Sägeblattes S nähert sich somit dasselbe den beiden rechtsseitigen Absperrlamellen 15 und 16, wobei sich mit dem Sägebalken 7 auch die Steuerrollen 11 und 12 nach rechts bewegen. Kurz bevor das Sägeblatt S auf die beiden Absperrlamellen 15 und 16 auftrifft, läuft die Rolle 11 (Fig. 2) auf die Steuerkurve 21 (Fig.3) auf und drückt den Steuerbalken 20 in seine untere, in Fig. 4 gezeigte Lage. Da sich die Vertikalbewegung des Steuerbalkens 20 über den Steuerstift 25 auf die innere Absperrlamelle 16 überträgt, werden die Einschnitte E derselben mit denjenigen der äusseren Absperrlamelle 15 in Ueberlappung gebracht, sodass das Sägeblatt den so gebildeten Spalt 28 passieren kann (Fig. 10).

Beim Vertikalschnitt befinden sich die Absperrlamellen 15, 16 und 17 in ihrer vorgeschobenen Absperrlage und bilden so den in Fig. 7 mit V bezeichneten vertikalen Sägespalt, in welchen das eingetauchte Sägeblatt S hineinragt.

Wie Fig. 9 zeigt, befinden sich die beiden Absperrlamellen 15/16 beim Zerteilen grosser Platten in ihrer hinteren Lage, so dass das Sägeblatt S ungehindert passieren kann. Grundsätzlich könnten die beiden Absperrlamellen 15/16 auch vorgeschoben sein, doch müsste mit dieser Vorschubbewegung auch die Ueberdeckung der Einschnitte E verbunden sein.

Der Anschlag T kann vorzugsweise von Hand in seine Stellung nach Fig. 10 geschwenkt werden, wenn er als Begrenzung für die kleineren Platten W₂ gebraucht wird.

## Patentansprüche

1. Vertikale Plattensäge zum Unterteilen von Platten aus Holz, Kunststoff und deren Verbundstoffen, mit einem praktisch vertikalen ortsfesten Rahmen (1-4), einem an demselben vertikalbeweglich geführten, aus in gegenseitigen Abständen angeordneten Stützlatten (5a, 5b) bestehenden Lattenrost (5) und einem an dessen Vorderseite angeordneten Sägebalken (7), der sich über die Gesamthöhe des Lattenrostes (5) erstreckt und auf dessen Gesamtlänge von Hand verschiebbar ist, wobei an dem Sägebalken (7) ein mit einem kreisförmigen Sägeblatt (S) versehenes Sägeaggregat (8) so angeordnet ist, dass es sich längs des Sägebalkens (7) verfahren, von einer Horizontalschnittlage in eine Vertikalschnittlage und umgekehrt um jeweils 90° verschwenken und in jeder dieser beiden Schnittlagen in Richtung des Lattenrostes (5) zwecks Durchführung des jeweiligen Schnittes eintauchen lässt, wobei ferner sowohl im Mittelbereich als auch im Bereich des rechten Lattenrost-Endabschnitts je ein vertikaler, an eine Saugquelle angeschlossener Holzstaub-Absaugekanal (13) angeordnet ist, dadurch gekennzeichnet, dass mindestens der im Mittelbereich des Lattenrostes angeordnete Absaugekanal (13) in seinem rechten Randbereich von zwei aufeinanderliegenden Absperrlamellen (15, 16) begrenzt ist, deren Vorderkanten in den Arbeitsbereich des Sägeblattes (S) in Horizontalschnittposition hineinragen, die beide mit mehreren in gegenseitigem Abständen angeordneten, nach der Sägeblattseite hin offenen Einschnitten (E) versehen sind und deren eine (16) gegen die andere (15) vertikal verschiebbar ist, wobei diese Vertikalverschiebung so mit der Horizontalschnitt-Eintauchbewegung des Sägeblattes (S) gekoppelt ist, dass die beiden aufeinanderliegenden Absperrlamellen (15, 16) den vertikalen Absaugekanal (13) beim Horizontalschnitt einseitig abdichtend begrenzen und damit den zwangsläufigen Eintritt des vom Sägeblatt (S) weggeschleuderten Sägestaubes in den vertikalen Absaugekanal (13) gewährleisten, und dass sich die Einschnitte (E) der beiden aufeinanderliegenden Absperrlamellen (15, 16) gegen Ende des Horizontalschnittes bündig überlappen und damit einen Durchtrittsspalt (28) für das Sägeblatt (S) bilden.

2. Plattensäge nach Anspruch 1, dadurch gekennzeichnet, dass auch der linke Randbereich des vertikalen Absaugekanals (13) eine Absperrlamelle (17) aufweist, wobei die drei Absperrlamellen (15, 16, 17) in einer annähernd waagrechten Ebene so beweglich sind, dass sie beim Vertikalschnitt in ihrer vorgeschobenen Abdichtposition das vertikale Sägeblatt (S) unter Bildung eines Sägespaltes (28) seitlich begrenzen (Fig. 8), wogegen beim Horizontalschnitt die linke Absperrlamelle (17) hinter die Auflageebene des Lattenrostes (5) zurückgezogen ist.

3. Plattensäge nach den Ansprüchen 1 oder 2, dadurch gekennzeichnet, dass die waagrechte Bewegung der Absperrlamellen (15, 16, 17) durch hinter dem Lattenrost (5) angeordnete Antriebsorgane (18, 19) erfolgt, die in Abhängigkeit von der jeweiligen Position des Sägeaggregates (8) gesteuert sind.

4. Plattensäge nach einem der Ansprüche 1 bis 3, dadurch gekennzeichnet, dass die vertikal verschiebbare (16) der beiden den vertikalen Absaugekanal (13) im rechten Randbereich begrenzenden, übereinanderliegenden Absperrlamellen (15, 16) an ihrem oberen Ende mit einem Steuerorgan (21) zusammenwirkt, das die genannte Absperrlamelle (16) in Abhängigkeit von der jeweiligen Lage des Sägebalkens (7) gegen die Rückstellkraft einer Feder (26) um ein bestimmtes Mass (h) nach unten drückt.

5. Plattensäge nach einem der Ansprüche 1 bis 4, dadurch gekennzeichnet, dass am Sägebalken (7) eine mit der jeweiligen Höhenlage des in Horizontalabschnittlage befindlichen Sägeblattes (S) gekoppelte Nockenstange (10) vertikalbeweglich geführt ist, welche in gleichen gegenseitigen Abständen aus dem Stangenprofil um ein bestimmtes Mass (a, Fig. 2) herausragende Nocken (9) aufweist, wobei am Sägeaggregat (8) ein Ausweichorgan (M) angeordnet ist, das beim Umschwenken des Sägeaggregats (8) in die Horizontalschnittposition, je nach der Höhenlage des Sägeblattes, auf eine Nocke (9) auftritt und einerseits den Lattenrost (5) so weit verschiebt, dass das Sägeblatt (S) zwischen zwei einander benachbarte waagrechte Rostlatten (5b) zu liegen kommt, wobei ferner die genannten Einschnitte (E) der nicht höhenverschieblichen (15) der beiden übereinanderliegenden Absperrlamellen (15, 16) in Höhenlage und gegenseitigen Abständen (b, Fig. 5) so gewählt sind, dass nach der durch das Ausweichorgan (M) erfolgten Höhenpositionierung des Lattenrostes immer einer der genannten Einschnitte (E) auf Sägeblatthöhe liegt, während die entsprechenden Einschnitte (E) der anderen Absperrlamelle (16) um die Verstellhöhe (h, Fig. 3) der Steuerkurve (21) nach oben versetzt sind.

6. Plattensäge nach Anspruch 5, dadurch gekennzeichnet, dass das genannte Ausweichorgan (M) durch die Umschwenkbewegung des Sägeaggregates (7) von dessen Horizontalin die Vertikallage so geführt ist, dass es in der Vertikalschnittposition des Sägeaggregates an den genannten Nocken (9) der Nockenstange (10) in einem Abstand vorübergleitet, welcher grösser als das bereits erwähnte Mass (a) ist.

7. Plattensäge nach Anspruch 6, dadurch gekennzeichnet, dass die Nockenstange (10) an ihrem oberen, über den Lattenrost hinausragenden Ende mit einer Doppelrolle (11, 12) verbunden ist, deren beide Rollen auf unterschiedlicher Höhe und seitlich gegeneinander versetzt sind, wobei eine erste (12) der beiden Rollen auf der obersten Latte (5a) des Lattenrostes (5) aufliegt und die zweite Rolle (11) mit dem genannten Steuerorgan (20) zusammenwirkt.

8. Plattensäge nach Anspruch 7, dadurch gekennzeichnet, dass das Steuerorgan (20) ein sich über den Verschiebeweg des Sägebalkens (7) erstreckender Steuerbalken ist, der von unten durch die vertikal verschiebbare, elastisch vorgespannte Absperrlamelle (16) nach oben zur Anlage an der vorgenannten zweiten Rolle (11) gedrückt wird.

9. Plattensäge nach Anspruch 8, dadurch gekennzeichnet, dass die Lage der Steuerkurve (21) am Steuerbalken (20) so gewählt ist, dass die genannten Einschnitte (E) der beiden rechtsseitigen Absperrlamellen (15, 16) sich erst kurz, dass heisst 5 bis 20 mm, bevor sie die Sägeblatt-Vorderkante erreicht, bündig überlappen.

10. Plattensäge nach einem der vorangehenden Ansprüche, dadurch gekennzeichnet, dass die Absperrlamellen (15, 16, 17) auf in vertikalen Abständen am Rahmen befestigten Bügeln (14) so geführt sind, dass sich die linke (17) und die beiden rechtsseitigen Absperrlamellen (15, 16) zwecks Bildung des Vertikalschnitt-Sägespaltes (V, Fig. 7) auf nach vorne aufeinander zulaufenden Vertikalebenen bewegen.

11. Plattensäge nach einem der Ansprüche 1 bis 10, dadurch gekennzeichnet, dass die beiden vertikalen Absaugekanäle (13) auf der Rückseite des Lattenrostes (5) durch eine gemeinsame Absaugeleitung (A, Fig. 1) verbunden sind, in welcher ein Schieber je nach Bedarf nur den gerade in Betrieb befindlichen der beiden Absaugekanäle (13) mit der Saugquelle verbindet.

## Claims

1. Vertical panel saw for sectioning panels made of wood, plastic and composites thereof, having a practically vertical fixed frame (1-4), a lath grid (5), which is mounted to move vertically thereon and comprises support laths (5a, 5b) spaced apart from one another, and a sawing beam (7) arranged on the front side thereof, which extends over the entire height of the lath grid (5) and may be moved manually on its entire length, a sawing unit (8) fitted with a circular saw blade (S) being arranged on the sawing beam (7) in such a way that it may be moved along the length of the sawing beam (7), swung 90° respectively from a horizontal cutting position into a vertical cutting position and back, and plunged into one of these two cutting positions in the direction of the lath grid (5) in order to perform the respective cut, and moreover a respective vertical wood dust suction removal duct (13) connected to a suction source is arranged both in the central area and in the area of the right-hand end section of the lath grid, characterised in that at least the suction removal duct (13) arranged in the area of the lath grid is defined in its right-hand edge region by two superposed locking plates (15, 16), the front edges of which project into the working range of the saw blade (S) in the horizontal cutting position, both being provided with several incisions (E) spaced apart from one another and open towards the saw blade side and one (16) being vertically displaceable relative to the other (15), and this vertical displacement is coupled with the plunging movement of the saw blade (S) for horizontal cutting in such a way that the two superposed locking plates (15, 16) border the vertical suction removal duct (13) during horizontal cutting to seal it on one side, thus assuring that the sawdust flung away from the saw blade (S) is forced to enter the vertical suction removal duct (13), and that towards the end of the horizontal cutting, the incisions (E) of the two superposed locking plates (15, 16) overlap flush, thus forming a gap (28) for the saw blade (S) to pass through.

2. Panel saw according to Claim 1, characterised in that the left-hand edge region of the vertical suction removal duct (13) also has a locking plate (17), and the three locking panels (15, 16, 17) are movable in a virtually horizontal plane in such a way that during vertical cutting when pushed forward in their sealing position, they laterally border (Figure 8) the vertical saw blade (S) forming a sawing gap (28), whereas during horizontal cutting the left-hand locking plate (17) is retracted to behind the support plane of the lath grid (5).

3. Panel saw according to Claims 1 or 2, characterised in that the horizontal movement of the locking plates (15, 16, 17) is achieved by drive elements (18, 19), which are arranged behind the lath grid (5) and are controlled in dependence on the respective position of the sawing unit (8).

4. Panel saw according to one of Claims 1 to 3, characterised in that the vertically displaceable plate (16) of the two superposed locking plates (15, 16) bordering the vertical suction removal duct (13) in the right-hand edge region cooperate at their upper end with a control element (21) which presses said locking plate (16) downwards against the restoring force of a spring (26) by a specific dimension (h) in dependence on the respective position of the sawing beam (7).

5. Panel saw according to one of Claims 1 to 4, characterised in that a cam rod (10) coupled to the respective height position of the saw blade (S) located in the horizontal cutting position is mounted to move vertically on the sawing beam (7), said cam rod having cams (9) projecting at equal distances from one another from the rod profile by a specific dimension (a, Figure 2), and a deflection element (M) is arranged on the sawing unit (8) which, depending on the height position of the saw blade, when the sawing unit (8) swings round into the horizontal cutting position, moves onto a cam (9) and pushes the lath grid (5) on one side so far that the saw blade (S) comes to lie between two adjacent horizontal grid laths (5b), and additionally the incisions (E) of the plate (15) of the two superposed locking plates (15, 16) which is not height-adjustable are selected in height position and distances apart (b, Figure 5) in such a way that after the lath grid has been positioned in height by the deflection element (M), one of the specified incisions (E) is always located at the height of the saw blade, whereas the corresponding incisions (E) of the other locking plate (16) are displaced upwards by the adjustment height (h, Figure 3) of the radial cam (21).

6. Panel saw according to Claim 5, characterised in that as a result of the swinging movement of the sawing unit (7) from its horizontal position into its vertical position, said deflection element (M) is mounted in such a way that when the sawing unit is in the vertical cutting position, said deflection element slides over said cams (9) of the cam rod (10) at a distance greater than the already mentioned dimension (a).

7. Panel saw according to Claim 6, characterised in that the cam rod (10) is connected at its upper end projecting beyond the lath grid to a double roll (11, 12), the two rolls of which are at different levels and laterally offset from one another, the first (12) of the two rolls lying on the uppermost lath (5a) of the lath grid (5) and the second roll (11) cooperating with said control element (20).

8. Panel saw according to Claim 7, characterised in that the control element (20) is a control beam, which extends over the displacement path of the sawing beam (7) and which is pressed upwards from below by the vertically displaceable resiliently biased locking plate (16) for abutment against the above-mentioned second roll (11).

9. Panel saw according to Claim 8, characterised in that the position of the radial cam (21) on the control beam (20) is selected so that said incisions (E) of the two right-hand locking plates (15, 16) overlap one another flush at a short distance, i.e. 5 to 20 mm, before they reach the front edge of the saw blade.

10. Panel saw according to one of the preceding claims, characterised in that the locking plates (15, 16, 17) are mounted on stirrups (14) spaced vertically on the frame in such a way that the locking plate (17) on the left, and the two locking plates (15, 16) on the right move on forward converging vertical planes in order to form the sawing gap (V, Figure 7) for the vertical cut.

11. Panel saw according to one of Claims 1 to 10, characterised in that the two vertical suction removal ducts (13) are connected on the rear side of the lath grid (5) by a common suction removal pipe (A, Figure 1), in which a slide valve connects to the suction source, as required, only the duct of the two suction removal ducts (13) currently in operation.

## Revendications

1. Scie verticale à panneaux pour le tronçonnage de panneaux de bois, de matière plastique et de leurs matériaux composites, comportant un cadre fixe pratiquement vertical (1-4), une grille à lattes (5) qui est guidée de manière à être déplaçable verticalement contre ce cadre et est constituée par des lattes de support (5a,5b) disposées à des distances réciproques, et une poutre porte-scie (7) qui estdisposée sur le côté avant de cette grille, qui s'étend sur toute la hauteur de la grille à lattes (5) et est déplaçable manuellement sur toute la longueur de cette grille, et dans laquelle une unité de sciage (8) pourvue d'une lame de scie circulaire (S) est disposée sur la poutre porte-scie (7) de telle sorte qu'on peut la déplacer le long de la poutre porte-scie (7), qu'on peut la faire basculer respectivement sur 90° d'une position de coupe horizontale dans une position de coupe verticale et inversement et qu'on peut, dans chacune de ces deux positions de coupe, la repousser en direction de la grille à lattes (5) pour l'exécution de la coupe respective, et dans laquelle en outre un canal vertical respectif (13) d'aspiration de la sciure, qui est raccordé à une source d'aspiration, est disposé aussi bien dans la zone médiane que dans la zone de la section d'extrémité de droite de la grille à lattes, caractérisée en ce qu'au moins le canal d'aspiration (13) disposé dans la zone médiane de la grille à lattes est limité, dans sa partie marginale de droite, par deux lamelles de blocage disposées l'une contre l'autre (15,16), dont les bords avant pénètrent dans la zone de travail de la lame de scie (S) dans la position de coupe horizontale et qui sont toutes deux équipées de plusieurs encoches (E) qui sont disposées à des distances réciproques et s ouvrent en direction de la lame de scie, et dont l'une (16) est déplaçable verticalement par rapport à l'autre (15), ce déplacement vertical étant couplé au déplacement d'insertion en coupe horizontale de la lame de scie (S) de telle sorte que les deux lamelles de blocage disposées l'une contre l'autre (15,16) limitent unilatéralement, d'une manière étanche, le canal vertical d'aspiration (13) lors d'une coupe horizontale et par conséquent garantissent l'introduction forcée de la sciure, projetée par la lame de scie (S), dans le canal vertical d'aspiration (13), et que les encoches (E) des deux lamelles de blocage superposées (15,16) se chevauchent en étant de niveau vers la fin de la coupe horizontale et forment par conséquent une fente de passage (28) pour la lame de scie (S).

2. Scie à panneaux selon la revendication 1, caractérisée en ce que la partie marginale de gauche du canal vertical d'aspiration (13) comporte également une lamelle de blocage (17), les trois lamelles de blocage (15,16,17) étant déplaçables dans un plan approximativement horizontal de telle sorte que, lors de la coupe verticale, lorsqu'elles sont dans leur position avancée de fermeture étanche, elles limitent latéralement (figure 8) la lame de scie verticale (S) en formant une fente de sciage (28), tandis que lors de la coupe horizontale, la lamelle de blocage de gauche (17) est rétractée en arrière du plan d'appui de la grille à lattes (5).

3. Scie à panneaux selon les revendications 1 ou 2, caractérisée en ce que le déplacement horizontal des lamelles de blocage (15,16,17) est réalisé au moyen d'organes d'entraînement (18,19) qui sont disposés en arrière de la grille à lattes (5) et qui sont commandés en fonction de la position respective de l'unité de sciage (8).

4. Scie à panneaux selon l'une des revendications 1 à 3, caractérisée en ce que la lamelle de blocage déplaçable verticalement (16), qui fait partie des deux lamelles de blocage superposées (15,16) qui limitent le canal vertical d'aspiration (13) dans la zone marginale de droite, coopère, au niveau de son extrémité supérieure, avec un organe de commande (21) qui repousse vers le bas d'une distance déterminée (h) ladite lamelle de blocage (16) en fonction de la position respective de la poutre porte-scie (7), à l'encontre de la force de rappel d'un ressort (26).

5. Scie à panneaux selon l'une des revendications 1 à 4, caractérisée en ce que sur la poutre porte-scie (7) est guidée, de manière à être déplaçable verticalement, une tige à cames (10) qui est couplée à la position en hauteur respective de la lame de scie (S) située dans la position de coupe horizontale, et qui possède des cames (9) qui font saillie sur une certaine distance (a, figure 2) à partir du profil de la tige, à des distances réciproques identiques, un organe d'écartement (M) étant disposé sur l'unité de sciage (8), organe qui, lors du basculement de l'unité de sciage (8) dans la position de coupe horizontale, rencontre une came (9) en fonction de la position en hauteur de la lame de scie et, d'une part, déplace la grille à lattes (5) au point que la lame de scie (S) vient se situer entre deux lattes horizontales (5b) de la grille qui sont voisines, tandis qu'en outre la position en hauteur et les distances réciproques (b, figure 5) desdites encoches (E) de la lamelle de blocage non déplaçable en hauteur (15) qui fait partie des deux lamelles de blocage superposées (15,16), sont choisies de telle sorte qu'après le positionnement en hauteur de la grille à lattes, qui est exécutée par l'organe d'écartement (M), l'une desdites encoches (E) est toujours située à hauteur de la lame de scie, tandis que les encoches correspondantes (E) de l'autre lamelle de blocage (16) sont décalées vers le haut, et ce de la hauteur de réglage (h, figure 3) de la came de commande (21).

6. Scie à panneaux selon la revendication 5, caractérisée en ce que ledit organe d'écartement (M) est guidé par le mouvement de basculement de l'unité de sciage (7) depuis sa position horizontale dans la position verticale, de telle sorte que, lorsque l'unité de sciage est dans la position de coupe verticale, l'organe d'écartement glisse par-dessus lesdites cames (9) de la tige à cames (10) une une distance qui est supérieure à la distance déjà mentionnée (a).

7. Scie à panneaux selon la revendication 6, caractérisée en ce que la tige à cames (10) est reliée, au niveau de son extrémité supérieure, qui fait saillie au-delà de la grille à lattes, à une unité à deux galets (11, 12) dont les deux galets sont situés à des hauteurs différentes et sont décalés latéralement l'un par rapport à l'autre, un premier (12) des deux galets étant en appui sur la latte la plus élevée (5a) de la grille à lattes (5), tandis que le second galet (11) coopère avec ledit organe de commande (20).

8. Scie à panneaux selon la revendication 7, caractérisée en ce que l'organe de commande (20) est une barre de commande qui s'étend au-dessus du trajet de déplacement de la barre porte-scie (7) et qui est repoussée du bas vers le haut, de manière à s'appliquer contre le second galet (11) mentionné précédemment, par la lamelle de blocage (16) qui est déplaçable verticalement, qui est précontrainte élastiquement.

9. Scie à panneaux selon la revendication 8, caractérisée en ce que la position de la came de commande (21) sur la barre de commande (20) est choisie de telle sorte que lesdites encoches (E) des deux lamelles de blocage (15,16) situées du côté droit se chevauchent seulement sur une courte distance, c'est-à-dire entre 5 et 20 mm, en étant de niveau, avant d'atteindre le bord avant de la lame de scie.

10. Scie à panneaux selon l'une des revendications précédentes, caractérisée en ce que les lamelles de blocage (15,16,17) sont guidées sur des étriers (14) fixés à des distances verticales sur le cadre de telle sorte que la lamelle de blocage de gauche (17) et les deux lamelles de blocage de droite (15,16) se déplacent dans des plans verticaux qui convergent vers l'avant, pour former la fente de sciage pour la coupe verticale (V, figure 7).

11. Scie à panneaux selon l'une des revendications 1 à 10, caractérisée en ce que les deux canaux verticaux d'aspiration (13) sont reliés, sur le côté arrière de la grille à lattes (5), par une canalisation commune d'aspiration (A, figure 1), dans laquelle un coulisseau relie à la source d'aspiration, le cas échéant, uniquement celui des deux canaux d'aspiration (13) qui est précisément en fonctionnement.
